# EUROPEAN PATENT APPLICATION

(11) **EP 0 753 484 A1**
(43) Date of publication of application: **15.01.1997**
(21) Application number: 95304802.2
(22) Date of filing: 10.07.1995
(51) Int. Cl.: C01B 39/02, C01B 39/38, C01B 39/32, C01B 39/30, B01J 29/06, B01J 29/40, B01J 29/60, B01J 29/50

(54) **Zeolites and processes for their manufacture**

(71) Applicant: EXXON CHEMICAL PATENTS INC., Linden New Jersey 07036 (US)
(72) Inventor: Verduijn, Johannes Petrus,, B-3061 Leefdaal (BE)
(74) Representative: Darby, David Thomas

(57) **Abstract**

Colloidal zeolite seeds act as inorganic structure directing agents in zeolite synthesis.

## Description

This invention relates to zeolites, and to processes for their manufacture.

In International Application WO 93/08124, the disclosure of which is incorporated by reference herein, there is described the addition of colloidal zeolite seed crystals, i.e., crystals of particle size at most 100 nm, to synthesis mixtures subjected to thermal treatment for producing MFI-type zeolite of a desired, usually small, particle size and with a narrow particle size distribution. In comparative examples in the application, a zeolite synthesis mixture containing no seeds but otherwise identical and subjected to identical treatment still yields MFI-type zeolite. A larger particle size product, possibly slightly contaminated by amorphous material, results in the absence of seeding but the product is still the same MFI-type material, e.g., ZSM-5 or silicalite, whether the synthesis material is seeded or not.

Certain synthesis mixtures, however, though capable of yielding zeolites on thermal treatment, tend to produce mixtures of two or more different zeolites, or one or more zeolites heavily contaminated with amorphous material, or amorphous material only.

The present invention is based on the observation that the inclusion in such a synthesis mixture of even very small proportions of colloidal seed crystals of a given zeolite results, on thermal treatment, in a product in which the zeolite or zeolite type represented by the seeds is in an increased proportion and may be the sole product of the synthesis.

The present invention accordingly provides the use of colloidal zeolite seed crystals as structure directing agents in the thermal treatment of a zeolite synthesis mixture. More especially, the invention provides the use of colloidal seeds of a particular zeolite or zeolite type in a zeolite synthesis mixture to ensure that the product zeolite is at least partially, and advantageously wholly, that of the particular zeolite or zeolite type.

The invention accordingly facilitates the manufacture of zeolites from synthesis mixtures not themselves able to yield a zeolite or the desired zeolite. The use of such synthesis mixtures may have advantages; for example the zeolite to be produced may be one that normally requires an organic structure directing agent in the synthesis mixture. The presence of organic materials may cause difficulties in handling the synthesis mixture or disposing of waste materials; further, it usually necessitates a calcination step or ion exchange to yield a final product.

By the process of the invention, for example, K-ZSM-5 may be obtained from a synthesis mixture which if unseeded will give only an amorphous product; by seeding with colloidal silicalite crystals a pure ZSM-5 is obtained.

Similarly, zeolite KL may be obtained by seeding with KL seeds a synthesis mixture which if left unseeded yields zeolite W and amorphous material. Further, the same synthesis mixture, if seeded with colloidal Offretite, will yield Offretite.

Advantageously, for the manufacture of an MFI type zeolite, especially ZSM-5, the synthesis mixture is of a molar composition, expressed in terms of oxides, within the ranges:

| | |
|---|---|
| M₂O:Al₂O₃ | 1 to 3:1 |
| SiO₂:Al₂O₃ | 15 to 80:1 |
| H₂O:Al₂O₃ | 100 to 500:1 |

wherein M represents sodium or potassium.

Advantageously, for the manufacture of zeolite L, the synthesis mixture is of a molar composition, given in terms of oxides, within the ranges:

| | |
|---|---|
| K₂O/(K₂O + Na₂O) | from 0.60 to 1:1 |
| (K₂O + Na₂O/SiO₂) | from 0.18 to 0.36:1 |
| SiO₂/Al₂O₃ | from 5 to 15:1 |
| H₂O/(K₂O + Na₂O) | from 25 to 90:1 |

For the manufacture of Offretite, the molar composition, calculated in terms of oxides, is advantageously within the ranges:

| | |
|---|---|
| M₂O:Al₂O₃ | 1.9 to 2.1:1 |
| SiO₂:Al₂O₃ | 9 to 11:1 |
| H₂O:Al₂O₃ | 140 to 180:1 |

wherein M represents potassium, of which up to 30 molar per cent may be replaced by sodium.

The zeolite produced by the process of the invention is primarily an aluminosilicate, and will be described herein as such. It is, however, within the scope of the invention to replace aluminium wholly, though preferably only partly, with gallium, or partly with boron, iron or other trivalent elements, and silicon may similarly be replaced by germanium or phosphorus. It is also within the scope of the invention to include inorganic cations other than potassium or sodium in the synthesis mixture.

The sources of the various elements required in the final product may be any of those in commercial use or described in the literature, as may the preparation of the synthesis mixture.

For example, the source of silicon may be for example, silica powder, a silicate, e.g., an alkali metal silicate, a tetraalkyl orthosilicate, or an aqueous colloidal suspension of silica, for example one sold by E.I. du Pont de Nemours under the trade name Ludox. Ludox HS-40 is a sodium-containing product, while AS-40 contains very little sodium.

The source of aluminium may be, for example, aluminium metal, e.g., in the form of chips, hydrated alumina, a water-soluble aluminium salt, e.g., aluminium sulphate, or an alkoxide, e.g., aluminium isopropoxide.

The alkali metal ion source is advantageously sodium or potassium hydroxide.

The seeds, e.g., silicalite seeds, are conveniently prepared as described in WO 93/08125, the disclosure of which is incorporated by reference herein. Advantageously, their particle size is within the range of 25 to 90, preferably 30 to 75, nm.

The synthesis mixture is conveniently prepared by dissolving the aluminium source and alkali metal source in water, adding the silica source, adding the seed crystals, heating to boiling, cooling, and correcting for water loss such that the required molar proportions result.

Hydrothermal treatment is advantageously carried out at a temperature within the range of from 100°C to 200°C, preferably from 140° to 180°C and conveniently at about 150° to 175°C, advantageously for a time within the range of from 20 to 200 hours, preferably within the range of from 50 to 160 hours. Treatment is desirably carried out statically.

It has been found that very small proportions of the colloidal seed crystals are effective to promote crystallization of the desired zeolite. The process may employ very small proportions of colloidal seeds, e.g., from 0.0002 to 0.1%, by weight of the total synthesis mixture, advantageously from 0.001 to 0.08%, and conveniently from 0.01 to 0.075%.

The procedures described above yield zeolites in non-acidic form, that are directly, i.e., without calcination, suitable for use as catalysts for processes requiring non-acidic molecular sieves, e.g., especially those treating hydrocarbons, e.g., cracking, hydrocracking and de-waxing. The Na and K ZSM materials are especially useful for the above purposes. Zeolite L is useful as a catalyst in numerous hydrocarbon conversions, and is effective in hydrocarbon separations and adsorptions, and is useful as a catalyst base, as is Offretite, which is especially useful also in aromatization, alkylation, and isomerization.

The invention further provides the use of the thus synthesized zeolites, either in particulate form or in the form of a layer on a support, especially a membrane, as catalysts, catalyst supports or adsorption agents in organic reactions, if desired or required after cation exchange, washing, or calcining.

The following Examples illustrate the invention:

### Example 1

This example illustrates the seeding of a synthesis mixture to yield K ZSM-5. A synthesis mixture was prepared using the following components:

| | Parts by Weight |
|---|---|
| Ludox AS-40, 40% SiO₂ by weight in water (Du Pont) | 80.50 |
| KOH pellets, 87.5% wt purity | 10.38 |
| Al₂(SO₄)₃.18H₂O | 8.94 |
| H₂O, deionized | 335.32 |
| Colloidal silicalite suspension, 12.5% wt% in water (prepared as described in WO 93/08125, particle size ≈90 nm) | 0.300 |

The aluminium sulphate and potassium hydroxide were dissolved in 260.54 parts water with boiling until a clear alumina solution resulted. The colloidal seed suspension was added to the colloidal silica solution. The aluminate solution was then added followed by 74.78 parts of water used to rinse the aluminate solution vessel to ensure quantitative transfer and the mixture stirred for 5 minutes. Its molar composition was
1.52 K₂O:0.25 Al₂O₃: 10 SiO₂:404 H₂O
and it contained 0.0070 wt% colloidal seeds.

For comparison purposes, a second synthesis mixture of identical molar proportions was prepared without seeds.

311 g of seeded synthesis mixture were transferred to a stainless steel autoclave which was placed in an oven at room temperature. The oven was heated to 160°C over the course of 2 hours, and maintained at that temperature for 152 hours.

The autoclave contents were then washed six times with 750 ml water to a pH of 9.5. After separation from the wash water by centrifuging, the product was dried overnight at 120°C; the yield was 23.5 g, and the Si:Al₂ atomic ratio was 37.6:1. From XRD and SEM analysis the product was seen to be excellently crystalline and pure ZSM-5, the crystallites being uniform and coffin-shaped with a length of about 2.8 µm.

The unseeded mixture was treated identically to the seeded sample. XRD analysis shows that the product was completely amorphous.

### Example 2

The procedure of Example 1 for forming a synthesis mixture was repeated, using a mixture of molar composition
1.27 K₂O:0.167 Al₂O₃:10 SiO₂:403 H₂O
seeded with 0.0113% colloidal silicalite crystals. The resulting SiO₂:Al₂O₃ molar ratio was about 60:1. 314 parts of the mixture were heated in a static stainless steel autoclave for 132 hours at 160°C. After washing 5 times with 750 parts by volume of water, to a pH of 9.7, the product was dried at 125°C, yield 7.2 wt% based on the synthesis mixture. The Si:Al₂ atomic ratio of the product was 55:1. XRD showed an excellently crystalline pure ZSM-5 product, while SEM showed uniform coffin-like crystals with a length of 1.8 µm.

A similar synthesis mixture seeded with 0.0109 wt% silicalite crystals of length 1.0 µm and identically hydrothermally treated yielded an amorphous product, indicating the need for the seed crystals to be nanometer size, and be capable of forming a colloidal solution.

### Example 3

The procedure of Example 2 was repeated, but using 0.001% (10 ppm) of nanometer-sized seed crystals. The product was again excellently crystalline ZSM-5, indicating that extremely small proportions are effective in preparing ZSM-5.

### Example 4

The procedure of Example 2 was repeated, but using a reduced water content, the molar proportion of the synthesis mixture being:
1.27 K₂O:0.167 Al₂O₃:10 SiO₂:203 H₂O

The mixture contained 0.0196% (196 ppm) nanometer-sized silicalite seed crystals. The product was again seen by XRD to be excellently crystalline and pure, SEM showing twinned crystals with a length of about 1.2 µm. The yield, based on the synthesis mixture, was 13.8 wt%.

### Example 5

This example illustrates the preparation of zeolite L. Nanocrystals for seeding purposes were made as follows:

The following two solutions were prepared:

| Solution A | parts by weight |
|---|---|
| KOH pellets, 87.4% purity (Baker) | 53.17 |
| Al(OH)₃, 98.5% purity (Alcoa) | 8.20 |
| H₂O, deionized | 57.19 |

The potassium and aluminium sources were mixed with the water which was boiled until a clear solution resulted. After cooling to room temperature, any water loss was corrected.

| Solution B | parts by weight |
|---|---|
| SiO₂, Ludox HS40, 40% SiO₂ by weight | 155.54 |
| H₂O, deionized | 23.13 |

Solution A was quantitatively added to Solution B with stirring. The resulting synthesis mixture had a molar composition of
8.0 K₂O:Al₂O₃:20 SiO₂:200 H₂O.

The synthesis mixture was thermally treated at 92.5°C for 408 hours in a polypropylene vessel under reflux conditions. The resulting reaction mixture was washed with water to a pH of between 10 and 11, and kept in the last wash water.

A portion was dried and subjected to XRD and SEM, by which it was established that the crystals were of zeolite KL, and particle size about 75 nm.

The washed reactor slurry was transferred to a plastics container and left undisturbed for 7 days. The suspended KL product showed no tendency to settle on the container base.

The following two solutions were then prepared:

| Solution A | parts by weight |
|---|---|
| KOH pellets, 87.4% purity (Baker) | 26.98 |
| Al(OH)₃, 98.5% pellets (Alcoa) | 15.84 |
| H₂O, deionized | 75.08 |

The potassium and aluminium sources were mixed with the water which was boiled until a clear solution resulted. The solution was cooled to room temperature and water loss made up.

| Solution B | parts by weight |
|---|---|
| SiO₂, Ludox HS40 | 150.24 |
| H₂O, deionized | 108.65 |
| Zeolite L seeds, 75 nm, 5.49 wt % solids in water | 5.22 |

The water was added to the colloidal silica, and the resulting liquids mixed in a blender. The seed suspension was added to the blender contents, and mixed for 30 seconds. Then Solution A was added and mixed for a further 3 minutes, a thickening gel being obtained.

The molar composition of the synthesis mixture was:
2.10 K₂O:Al₂O₃:10 SiO₂:160 H₂O
with 0.075% by weight seeds, based on the total weight of mixture.

A second unseeded, but otherwise identical, synthesis mixture was prepared.

339.1 g of each synthesis mixture were transferred to 300 ml stainless steel autoclaves, which were placed in an oven at room temperature. The oven was heated to 150°C and maintained at that temperature for 80 hours.

The product of the seeded synthesis mixture was excellently crystalline and pure zeolite L, while that of the comparison consisted mainly of zeolite W and amorphous material.

### Example 6

A synthesis mixture with a molar composition of
3.14 K₂O:0.177 Al₂O₃:10 SiO₂: 159 H₂O
was prepared. The K₂O:Al₂O₃ ratio of this synthesis mixture was such that if hydrothermally treated on its own a zeolite L heavily contaminated with zeolite T and amorphous material would result. The mixture was, however, seeded with 255 ppm (0.025%) by weight 75 µm KL seed crystals, prepared as described in Example 5.

The mixture was treated for 80 hours at 170°C in a stainless steel autoclave, washed with water to pH 9.5, and dried at 120°C. The product was pure zeolite KL. SEM showed a product of disk-shaped crystals with flat basal planes ("hockey puck" type crystals).

### Example 7

This example illustrates the production of colloidal Offretite of particle size below 50 nm and its use in seeding. The synthesis mixture contained the following components.

| | Parts by Weight |
|---|---|
| TMAOH, 25% by weight in water (Fluka) | 108.52 |
| Al chips, 99.99% wt purity (Fluka) | 2.8924 |
| SiO₂ powder, 89.8% wt, 10.2% water (Baker) | 35.52 |
| (It is believed that a small proportion of KOH was present as contaminant in the TMAOH.) | |

The Al chips were dissolved in the TMAOH solution with stirring and gentle heat. After addition of the silica powder, the mixture was heated to boiling with stirring and kept at boiling point for 5 minutes. It was apparent that not all the silica had dissolved, some settling on the base of the glass beaker. The molar composition of the synthesis mixture was:
2.78 (TMA)₂O:0.47 K₂O:Al₂O₃:9.90 SiO₂:91H₂O

The synthesis mixture was homogenized by vigorous stirring for several minutes, then immediately poured into a plastic bottle which was placed in an oil bath, the open end of the bottle being connected to a reflux condenser. The oil bath was heated to 85°C, and maintained at that temperature over a period. The appearance of the mixture gradually changed, with the quantity of deposited silica reducing, while the mixture developed into a transparent jelly. Heating was terminated after 160 hours.

After washing using a 17500 rpm centrifuge, the product was suspended in the last wash water, a stable, colloidal, suspension resulting. A portion was evaporated to dryness and characterized by XRD and SEM. Although the diffractogram showed weak and broad peaks, the pattern was still recognizable as pure Offretite. The SEM showed that the product consisted of uniformly sized and shaped particles, about 45 nm x 20 nm. XRD analysis of a portion of product calcined in air at 475°C for 20 hours showed essentially no change in crystallinity, evidence of thermal stability.

A further synthesis mixture was prepared using the following components:

| | Parts by Weight |
|---|---|
| KOH pellets, 87.4% wt purity (Baker) | 25.70 |
| Al(OH)₃ powder, 98.5% wt purity (Alcoa) | 15.84 |
| H₂O, deionized | 185.67 |
| Ludox HS-40, 40% SiO₂ by weight in water (Du Pont) | 150.23 |
| Colloidal seed suspension, 5.36 wt% in water | 3.56 |

The potassium hydroxide and hydrated alumina were mixed for a few seconds in a high shear mixer and 75.02 parts water added to dissolve the aluminate. The colloidal silica was diluted with 110.65 parts of water, the colloidal seeds added to the resulting solution, and stirred for 3 minutes. The aluminate solution was then added and the resulting synthesis mixture stirred for 3 further minutes. Its molar composition was
2.00 K₂O:Al₂O₃:10 SiO₂:160 H₂O
and it contained 0.050 wt% colloidal Offretite.

For comparison purposes, a second Offretite synthesis mixture of identical molar proportions was prepared without seeds.

The synthesis mixtures were placed in separate autoclaves, heated to 150°C and maintained at that temperature for 96 hours. The resulting products were washed with water to a pH of 10.5 and dried at 110°C. The yield of the process according to the invention was about 17%, based on the total weight of synthesis mixture.

X-ray diffraction analysis of the product of the seeded process showed the characteristic pattern of Offretite, slightly contaminated with zeolite W, SEM showing rod-like particles of about 2 µm length and 0.1 µm diameter. Thermographic analysis showed a micropore capacity for toluene of 2.86%. The comparison process yielded a mixture of zeolite W and amorphous material.

### Example 8

To reduce the contamination by zeolite W resulting from the process of Example 7 the alkalinity of the synthesis mixture was increased, to give a molar composition of
2.20 K₂O:Al₂O₃:10 SiO₂:60 H₂O
seeding with 0.0502 % colloidal Offretite crystals, other components and reaction conditions being as in Example 7. XRD analysis showed an Offretite product free from zeolite W but now slightly contaminated with zeolite KL. Thermographic analysis showed a micropore capacity for toluene of 3.69%, which confirms the absence of zeolite W.

### Example 9

Example 7 was repeated with a synthesis mixture of the following molar composition:
2.10 K₂O:Al₂O₃: 10 SiO₂:160 H₂O

XRD analysis shows an Offretite product free from both zeolites KL and W.

### Example 10

The procedure of Example 9 was repeated, but using 0.075% by weight Offretite seeds. In a comparison example, a similar synthesis mixture, but with no seeds, was used.

The synthesis mixture seeded with Offretite gave an Offretite product, with no KL or W contamination.

The unseeded mixture gave a largely amorphous product with small proportions of W and KL.

## Claims

1. The use of colloidal zeolite seed crystals as structure directing agents in the thermal treatment of a zeolite synthesis mixture.

2. The use of colloidal seeds of a particular zeolite or zeolite type in a zeolite synthesis mixture to ensure that the product zeolite is at least partially that of the particular zeolite or zeolite type.

3. The use as claimed in claim 2, wherein the product zeolite is wholly that of the seed zeolite or zeolite type.

4. The use as claimed in any one of claims 1 to 3, wherein the zeolite synthesis mixture is one which, in the absence of zeolite seeds of a given type, would not give a zeolite product of that type or would not give a zeolite product wholly of that type.

5. The use as claimed in claim 4, wherein the synthesis mixture is free from any organic structure directing agent.

6. The use as claimed in any one of claims 1 to 5, wherein the zeolite produced is an MFI zeolite.

7. The use as claimed in any one of claims 1 to 5, wherein the zeolite produced is zeolite L.

8. The use as claimed in any one of claims 1 to 5, wherein the zeolite produced is Offretite.

9. The use as claimed in any one of claims 1 to 8, wherein the proportion of seeds is within the range of from 0.002 to 0.1% by weight of the total synthesis mixture.

10. The product of the process of any one of claims 1 to 9.

11. The use of the product claimed in claim 10 in particulate form or as a layer, if desired or required after washing, calcining, or ion exchange, in hydrocarbon conversion, separation, or adsorption.
